# EUROPÄISCHE PATENTSCHRIFT

(11) **EP 1 204 828 B1**
(45) Veröffentlichungstag und Bekanntmachung des Hinweises auf die Patenterteilung: **04.06.2003**
(21) Anmeldenummer: 00956452.7
(22) Anmeldetag: 16.08.2000
(51) Int. Cl.: F16H 57/00, F16H 55/18, F16H 57/12

(54) **GETRIEBE**
TRANSMISSION
TRANSMISSION

(30) Priorität: 17.08.1999 DE 19938933
(43) Veröffentlichungstag der Anmeldung: 15.05.2002
(73) Patentinhaber: INSTITUT FÜR MASCHINENELEMENTE UNIVERSITÄT STUTTGART, 70569 Stuttgart (DE)
(72) Erfinder: LECHNER, Gisbert, D-71032 Böblingen (DE); DOGAN, Süreyya, Nejat, D-70569 Stuttgart (DE); RYBORZ, Joachim, D-70569 Stuttgart (DE)
(74) Vertreter: Dreiss, Fuhlendorf, Steimle & Becker
(86) Internationale Anmeldenummer: EP0007979
(87) Internationale Veröffentlichungsnummer: WO01013010

(56) Entgegenhaltungen:
- DE-A- 19 842 452
- US-A- 5 809 843
- DATABASE WPI Section PQ, Week 199429 Derwent Publications Ltd., London, GB; Class P54, AN 1994-239748 XP002152744 -& SU 1 812 009 A (KRIVOROZH GORNORUDNYJ I), 30. April 1993 (1993-04-30)
- SUEREYYA NEJAT DOGAN ET AL: "MASSNAHMEN ZUR VERRINGERUNG VON LOSTEILSCHWINGUNGEN IN FAHRZEUGGETRIEBEN" ATZ AUTOMOBILTECHNISCHE ZEITSCHRIFT,DE,FRANCKH'SCHE VERLAGSHANDLUNG. STUTTGART, Bd. 100, Nr. 10, 1. Oktober 1998 (1998-10-01), Seiten 710-712,714-71, XP000785240 ISSN: 0001-2785
- PATENT ABSTRACTS OF JAPAN vol. 1996, no. 10, 31. Oktober 1996 (1996-10-31) -& JP 08 159240 A (NIPPON STEEL CORP;AWAJI SANGYO KK), 21. Juni 1996 (1996-06-21)
- DOGAN S.N.; LECHNER G.: 'Massnahmen zur Verringerung von Losteilschwingungen in Fahrzeuggetrieben' ATZ, AUTOMOBILTECHNISCHE ZEITSCHRIFT Bd. 100, Nr. 10, 1998, Seiten 710 - 716

## Beschreibung

Die Erfindung betrifft ein Getriebe, insbesondere Zahnradgetriebe, mit mehreren in Eingriff befindlichen Getriebeelementen, insbesondere Zahnrädern.

Ein Getriebe der eingangs genannten Art ist aus der Publikation "Maßnahmen zur Verringerung von Losteilschwingungen in Fahrzeuggetrieben", Dogan et al., ATZ Automobiltechnische Zeitschrift, Bd. 100, Nr. 10, Seiten 710 bis 716, bekannt. In dieser werden passive Maßnahmen zur Reduktion eines zwischen zwei Getriebeelementen vorhandenen Spiels beschrieben.

Basis hierfür ist die Tatsache, dass im Betrieb von Zahnradgetrieben Geräusche auftreten, die als störend empfunden werden. Dieses Problem tritt insbesondere in den zunehmend leiser werdenden Kraftfahrzeugen auf. Zur Verringerung der Getriebegeräusche sind verschiedene Maßnahmen vorgeschlagen worden, die jedoch nicht zufriedenstellend umgesetzt werden konnten. Zudem erfordern die bekannten Maßnahmen zusätzlichen Bauraum. Darüber hinaus führen die bekannten Maßnahmen zu einer Gewichtszunahme und einer Verschlechterung des Getriebewirkungsgrades.

In der DE 38 06 830 A1 ist ein Getriebe mit einer Getriebeoptimierungsvorrichtung genannt. Mit dieser kann die Lastverteilung zwischen zusammenarbeitenden Getriebeelementen optimiert werden. Hierdurch werden Überbelastungen der Getriebeelemente vermieden. Die bei lokalen Überbelastungen auftretenden Heulgeräusche können dabei reduziert werden. Die Vorrichtung ist relativ aufwändig und arbeitet nur in bestimmten Betriebszuständen des Getriebes zufriedenstellend.

In de US 5 809 843 ist ein Verfahren beschrieben, mit dem Heul- und Pfeifgeräusche bei einem Getriebe dadurch unterdrückt werden, dass am Antriebsmotor eine phasenverschobene Schwingung erzeugt wird. Die DE 198 42 452 A1 offenbart als Maßnahme gegen unerwünschte Getriebegeräusche, dass der Antriebsmotor nur in einem Betriebsbereich betrieben wird, in dem solche Geräusche nicht vorkommen.

Aufgabe der Erfindung ist es, ein Getriebe bereitzustellen, das die vorstehenden Nachteile überwindet.

Diese Aufgabe wird durch die Merkmale des Anspruchs 1 gelöst.

Durch eine aktive Veränderung des Spiels zwischen zwei Getriebeelementen kann verhindert werden, dass die Getriebeelemente in bestimmten Betriebszuständen aneinander schlagen. Das hat zur Folge, dass die störenden Klapper- und Rasselgeräusche unterbunden werden. Als Klappern werden die Geräusche bezeichnet, die im Leerlauf durch aneinanderschlagende lastlose Getriebeelemente verursacht werden. Als Rasseln werden die Geräusche bezeichnet, die im Zug- bzw. Schubbetrieb des Getriebes von aneinanderschlagenden lastlosen Getriebeelementen verursacht werden. Durch die erfindungsgemäße Lösung wird eine aktive Spielregelung ermöglicht, bei der die Zahnspiele (Verdrehflanken-, Axialund Radialspiel) durch Aktoren je nach Bedarf an den jeweiligen Betriebszustand angepasst werden können. Durch die aktive Spielregelung kann eine erhebliche Geräuschreduzierung erreicht werden.

Vorteilhafte Weiterbildungen der Erfindung sind in Unteransprüchen angegeben.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. In der Zeichnung zeigt:
- Figur 1: ein Blockdiagramm, das die prinzipielle Funktionsweise der Erfindung verdeutlicht;
- Figur 2: mehrere miteinander in Eingriff befindliche Zähne von zwei Zahnrädern eines Getriebes;
- Figur 3: die Lagerung eines der Zahnräder aus Figur 1 gemäß einer Ausführungsform der vorliegenden Erfindung;
- Figur 4: eine schematische Darstellung von zwei weiteren Ausführungsformen der Erfindung;
- Figuren 5 bis 7: weitere Ausführungsformen der Erfindung mit einem Piezoelement;
- Figuren 8 bis 10: weitere Ausführungsformen der Erfindung mit einer aktiven Feder;
- Figuren 11 und 12: weitere Ausführungsformen der Erfindung, bei denen das Spiel mit Hilfe von Fluidstrahlen verhindert werden kann;
- Figur 13: eine weitere Ausführungsform der Erfindung mit einer aktiven Haftschicht;
- Figuren 14 und 15: weitere Ausführungsformen der Erfindung mit einer elektrorheologischen oder magnetorheologischen Flüssigkeit;
- Figuren 16 und 17: weitere Ausführungsformen der Erfindung mit aktiven Magneten; und
- Figuren 18 bis 20: weitere Ausführungsformen der Erfindung mit magnetostriktiven Werkstoffen.

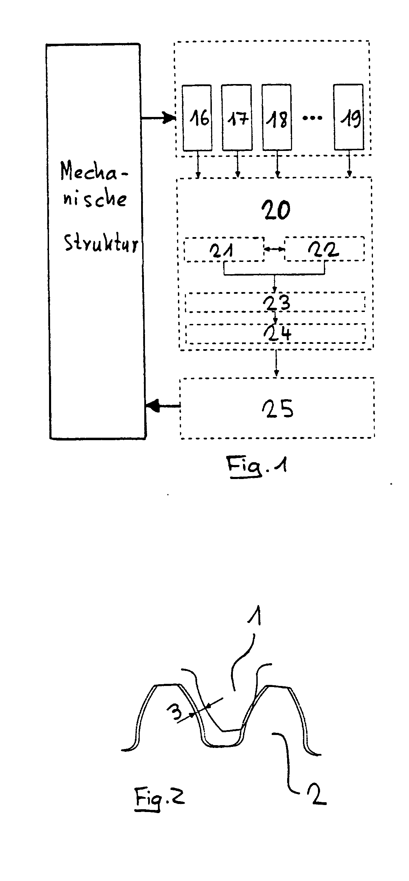

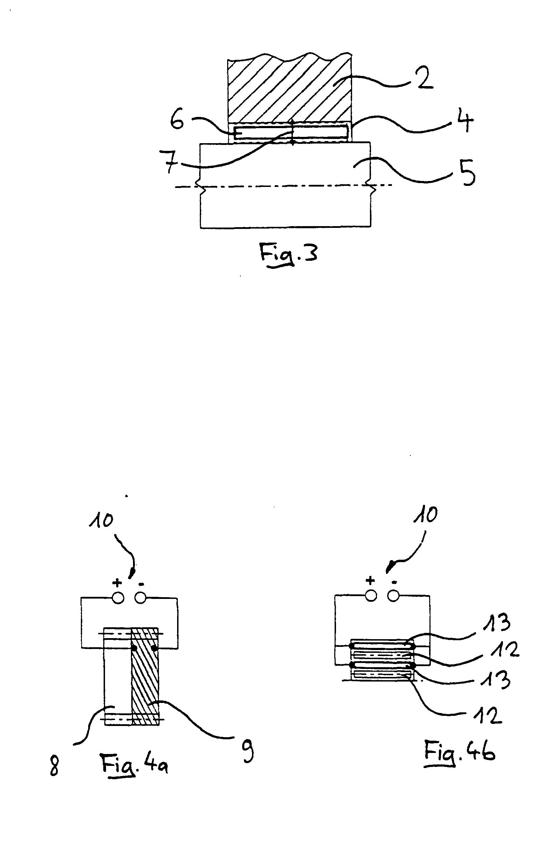

In Figur 1 ist anhand eines Blockdiagramms der Regelkreis der aktiven Spielregelung dargestellt. Hieraus erkennt man die Funktionsweise des erfindungsgemäßen Getriebes. Mit Hilfe von Sensoren 16, 17, 18 und 19, die am Losrad und/oder an anderen Getriebekomponenten angebracht sind, werden die geräuschrelevanten Parameter erfasst. Dazu gehören u.a. das Verdrehflankenspiel, das Axialspiel, das Radialspiel, die Winkelbeschleunigung, die Drehzahl, die Getriebeöltemperatur und der Betriebszustand des Getriebes. Die von den Sensoren 16 bis 19 erfassten Messgrößen werden in einer Informationsverarbeitungseinheit 20 weiter verarbeitet. In der Informationsverarbeitungseinheit 20 wird ein Soll-/Ist-Wertvergleich 21 mit 22 der geräuschrelevanten Parameter durchgeführt. Aus diesem Soll-/Ist-Wertvergleich wird mindestens eine Stellgröße 23 ermittelt. Die Stellgröße 23 wird dann in eine Regelgröße, z.B. eine Spannung 24, umgewandelt. Die Spannung 24 wird an Aktoren 25 angelegt. Entsprechend des Betriebszustandes werden die Verdrehflanken-, Axial- und Radialspiele derart beeinflusst, dass es zu keinen Stoßvorgängen infolge Torsionsschwingungen der Getriebewellen mehr kommt. Die Aktoren 25 verhindern das Entstehen von Klapper- oder Rasselgeräuschen in dem erfindungsgemäßen Getriebe durch aktive Spielregelung.

In Figur 2 sieht man einen Zahn 1 eines angetriebenen Festrades, der mit den Zähnen eines Losrades 2 kämmt. Das Verdrehflankenspiel ist mit 3 bezeichnet.

In Figur 3 sieht man, dass das Losrad 2 mit Hilfe einer Lagerung 4 auf einer Welle 5 gelagert ist. In der Lagerung 4 ist ein Lagerelement 6 aus einem Werkstoff mit einem Formänderungsvermögen angeordnet. Durch einen Doppelpfeil 7 ist angedeutet, dass das Lagerelement 6 sein Volumen verändern kann. Durch eine gezielte Formänderung des Lagerelements 6 kann das Losrad 2 im Bereich der Lagerung 4 mit der Welle 5 verspannt werden. Dies bewirkt bei stehender Welle 5 bzw. beim Vorliegen einer Relativdrehzahl zwischen Losrad 2 und Welle 5, dass das Losrad 2 abgebremst und ein Abheben der Zahnflanken (siehe Figur 1) verhindert wird.

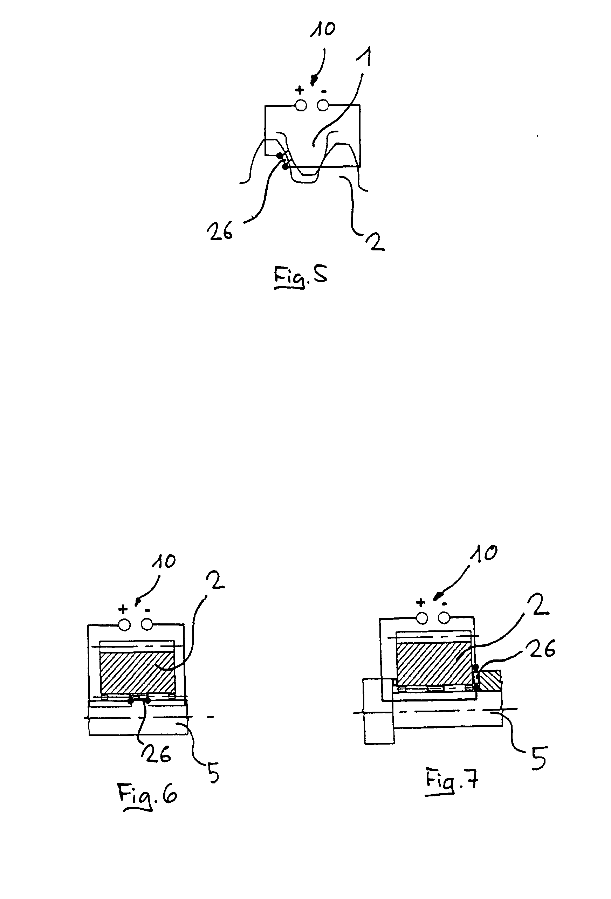

In Figur 4 ist auf der linken Seite ein Zahnrad dargestellt, das aus zwei verschiedenen Materialien 8 und 9 besteht. Das Material 9 kann in Abhängigkeit von einer angelegten Spannung 10 seine Form so verändern, dass ein vorgegebenes Spiel ausgeglichen werden kann. Auf der rechten Seite in Figur 4 sieht man, dass die Lagerung 4 aus Figur 2 abwechselnd aus normalen Lagerelementen 12 und Lagerelementen 13 aus einem Werkstoff mit einem Formänderungsvermögen gebildet ist. An den Lagerelementen 13 liegt eine Spannung 10 an.

In Figur 5 befindet sich ein treibendes Festrad 1 mit einem getriebenen Losrad 2 in Eingriff. Um das Verdrehflankenspiel auszugleichen, ist im Flankenbereich des Losrades 2 ein Piezoelement 26 als Aktor angeordnet. Das Piezoelement 26 kann senkrecht zur Zahnflanke eine Längenänderung erfahren. Die Längenänderung des Piezoelements 26 wird durch Anlegen einer Spannung 10 geregelt. Durch eine gezielte Spannungsregelung erfährt das Piezoelement 26 eine Längenänderung im Flankenbereich. Diese Längenänderung bewirkt eine aktive Optimierung des Verdrehflankenspiels je nach Betriebszustand des Getriebes.

In Figur 6 ist zu sehen, dass ein Piezoelement 26 im Lagerbereich zwischen einem Losrad 2 und einer Welle 5 angeordnet ist. Durch eine Formänderung des Piezoelements 26 wird das Losrad 2 an der Nabe im Lagerbereich durch eine Reibkraft so verspannt, dass das Losrad 2 aktiv je nach Bedarf abgebremst und ein Abheben der Zahnflanken verhindert wird. Dabei dehnt sich das Piezoelement 26 in einer, bezogen auf die Welle 5, radialen Richtung aus.

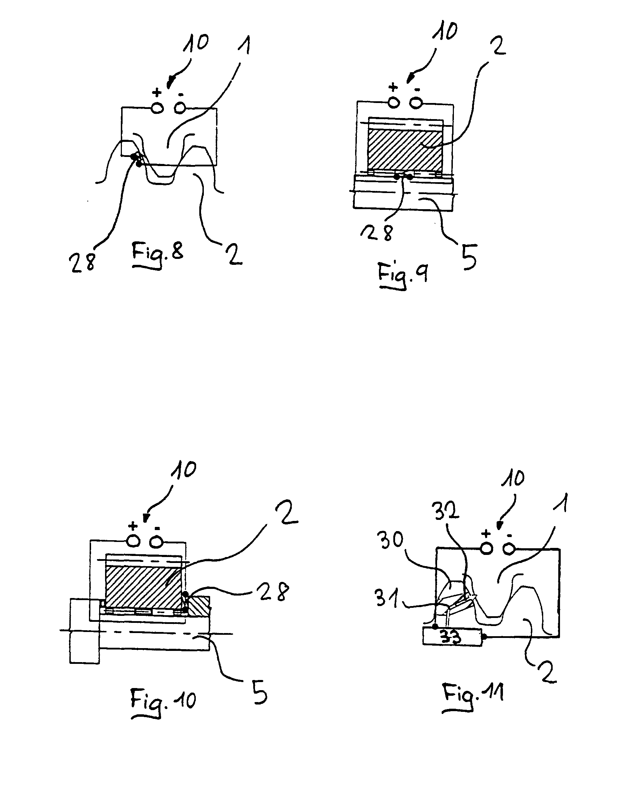

In Figur 7 ist eine Anordnung gezeigt, bei der das Axialspiel eines Losrades 2 mit Hilfe eines Piezoelements 26 je nach Bedarf ausgeglichen wird. Das Piezoelement 26 erfährt bei Anlegen einer Spannung 10 eine Ausdehnung in Richtung der Drehachse der Welle 5.

Bei der in Figur 8 dargestellten Ausführungsform wird im Unterschied zu der in Figur 5 dargestellten Ausführungsform statt eines Piezoelements eine aktive Feder 28 als Aktor verwendet. An der aktiven Feder 28 liegt eine Spannung 10 an. Die aktive Feder 28 kann aufgrund des durchfließenden elektrischen Stroms ihre Federrate verändern. Die Flanken der sich im Eingriff befindlichen Zähne des Festrades 1 und des Losrades 2 werden durch die Federkraft gegeneinander verspannt. Die Verspannung ist dabei proportional zur Federrate. Durch eine gezielte Regelung der Spannung 10 erfährt die aktive Feder im Flankenbereich eine Änderung der Federkraft. Dadurch wird eine Änderung der Vorspannkraft an den Zahnflanken hervorgerufen und das Abheben der Zahnflanken unterbunden.

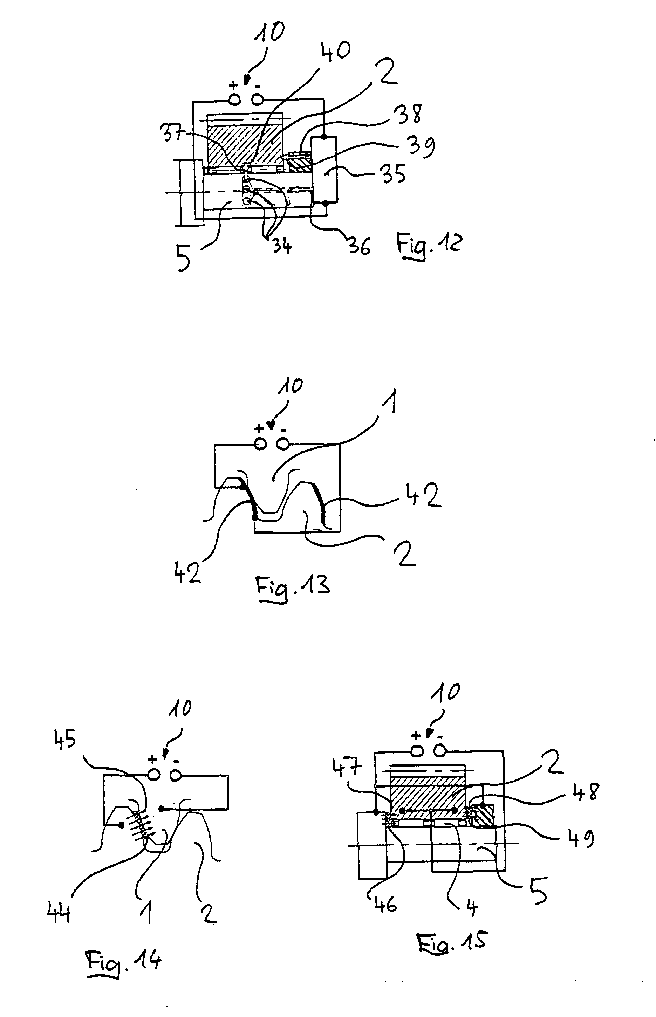

In den Figuren 9 und 10 ist ein Losrad 2 gezeigt, das auf einer Welle 5 gelagert ist. In Figur 9 sieht man, dass eine aktive Feder 28 zum Ausgleich des Radialspiels aber auch Vorspannen des Losrads zwischen der Welle 5 und der Nabe angeordnet ist. In Figur 10 sieht man, dass eine aktive Feder 28 zum Ausgleich des Axialspiels zwischen der Stirnseite des Zahnrades und einem Lagerbund angeordnet ist. Durch eine Regelung der Spannung 10 erfährt die aktive Feder 28 eine Längenänderung in radialer oder axialer Richtung. Demzufolge ändert sich die Federrate. Diese Längen- bzw. Federratenänderung bewirkt eine Optimierung des Lagerspiels.

Bei der in Figur 11 dargestellten Ausführungsform kämmt ein Festrad 1 mit einem Losrad 2. In einem Zahn 30 des Losrades 2 ist eine Bohrung 31 angebracht. Durch die Bohrung 31 kann, wie durch einen Pfeil 32 angedeutet ist, ein Fluidstrahl geleitet werden. Das Fluid kommt aus einer (nicht dargestellten) Fluidquelle. Zur Steuerung des durch die Bohrung 31 strömenden Fluidstrahls ist ein Druckventil 33 vorgesehen. An dem Druckventil 33 liegt eine Spannung 10 an. Durch den druckbeaufschlagten Gas- und/oder Flüssigkeitsstrahl wird ein Impuls in Form einer Kraft auf die gegenüberliegende Flanke des Festrades 1 übertragen. Je nach angelegter Spannung 10 öffnet das Magnetventil 33 und steuert so den Durchfluss des Gas- und/oder Flüssigkeitsstrahls aus der Bohrung 31 im Flankenbereich. Die angelegte Spannung ist dabei proportional zu Gas- und/oder Flüssigkeitsdruck. Durch eine gezielte Regelung der Impulskraft auf die Gegenfläche erfährt das Losrad je nach Betriebszustand eine Rückstellkraft, die ein Aneinanderschlagen der Zahnflanken verhindert.

In Figur 12 sieht man, dass ein Losrad 2 auf einer Welle 5 gelagert ist. Das Losrad 2 besitzt am linken und/oder rechten Axialbund mindestens eine oder mehrere Bohrungen, aus denen ein Fluidstrahl unter Druck austreten kann. Bei der in Figur 12 dargestellten Ausführungsform ist im Axialbereich eine Bohrung 38 angebracht, aus der ein Fluidstrahl 39 austritt. Durch den druckbeaufschlagten Fluidstrahl 39 wird ein Impuls in Form einer Kraft auf die Stirnfläche des Losrads übertragen. Der Durchfluss durch die Bohrung 38 wird über ein magnetgesteuertes Druckventil 35 durch Anlegen einer Spannung 10 gesteuert. Die Spannung ist dabei proportional zum Fluiddruck. Durch eine gezielte Regelung der Impulskraft auf die Stirnfläche wird das Losrad 2 je nach Betriebszustand in Position gehalten und die Axialstöße an den axialen Anlaufbunden reduziert.

Bei der in Figur 12 dargestellten Ausführungsform wird zur Lagerung des Losrades 2 ein geteiltes Nadellager verwendet. Zwischen den Nadeln der Losradlagerung sind mehrere Bohrungen 34 am Umfang der Welle 5 angeordnet. Aus den Bohrungen 34 können Fluidstrahlen unter Druck austreten, wie durch einen Pfeil 37 angedeutet ist. In der Nabe des Losrades 2 befinden sich am Umfang gestufte Ausnehmungen, die zwischen den Laufflächen des geteilten Lagers angeordnet sind. Die aus den Wellenbohrungen 34 unter Druck austretenden Fluidstrahlen werden so gegen die mit mehreren Vertiefungen 40 der Innenlauffläche der Nabe des Losrades 2 geschleudert, dass die Drehung des Losrades 2 in Folge der Impulskraft verzögert wird. Durch den Impuls wird das Losrad 2 an der Nabe im Lagerbereich abgebremst und somit das Abheben der Zahnflanken verhindert.

In Figur 13 ist ein Festrad 1 gezeigt, das mit einem Losrad 2 in Eingriff ist. Im Flankenbereich der Zähne des Losrades 2 sind aktive Haftschichten 42 ausgebildet. Durch die aktiven Haftschichten 42 wird das Abheben der Zahnflanken durch eine Haftkraft verhindert. Die Haftschicht 42 kann bspw. wie ein Klettverschluss ausgeführt werden. An der Haftschicht 42 liegt eine Spannung 10 an. Die Spannung 10 ist proportional zur Haftkraft. Die Haftkraft verhindert je nach Betriebszustand aktiv ein Aneinanderschlagen der Zahnflanken.

Bei den in den Figuren 14 und 15 dargestellten Ausführungsformen wird eine elektrorheologische oder magnetorheologische Flüssigkeit als Getriebeöl verwendet. Bei der in Figur 14 dargestellten Ausführungsform besitzt das Fest- und/oder Losrad im Zahnbereich mindestens einen oder mehrere elektrische Schleifkontakte, die ein elektrisches oder magnetisches Feld 45 erzeugen können. Zwischen dem Festrad 1 und dem Losrad 2 befindet sich eine elektrorheologische oder magnetorheologische Flüssigkeit 44. Die Viskosität dieser elektrorheologischen oder magnetorheologischen Flüssigkeit 44 im Flankenbereich der Zahnräder 1 und 2 wird durch das elektrische oder magnetische Feld 45 an den Zahnflanken je nach Betriebszustand verändert.

An dem Losrad und/oder an anderen Getriebekomponenten sind Sensoren angebracht, welche die geräuschrelevanten Parameter erfassen. Die gemessenen Werte werden von den Sensoren an eine Informationsverarbeitungseinheit, bspw. einen Regler, weitergeleitet. Im Regler erfolgt eine Informationsverarbeitung in Form eines Soll- und IstWertvergleichs. Aus diesem Vergleich wird eine Stellgröße in Form einer Spannung für die Regelung und Optimierung des elektrischen oder magnetischen Feldes 45 abgeleitet. Die angelegte Spannung 10 im Flankenbereich ist dabei proportional zur Viskosität der elektrorheologischen oder magnetorheologischen Flüssigkeit 44 im Flankenbereich. Durch eine gezielte Viskositätsänderung wird ein Aneinanderschlagen der Zahnräder 1 und 2 je nach Betriebszustand gedämpft, um so die Klapper- und Rasselgeräusche zu reduzieren.

Bei der in Figur 15 dargestellten Ausführungsform ist ein Losrad 2 auf einer Welle 5 gelagert. Das Losrad 2 besitzt am linken und am rechten Axialbund mehrere elektrische Schleifkontakte, die elektrische oder magnetische Felder 47 und 49 im Axialbereich erzeugen können. Durch eine angelegte Spannung 10 im Axialbereich wird die Viskosität einer elektrorheologischen oder magnetorheologischen Flüssigkeit 46 und 48 in diesen Bereich so verändert, dass die Axialstöße aktiv je nach Bedarf gedämpft werden und so die Klappergeräusche reduzieren. Die Spannung 10 ist dabei proportional zur Viskosität der elektrorheologischen oder magnetorheologischen Flüssigkeit 46 und 48.

Bei der in Figur 16 dargestellten Ausführungsform kämmt ein Festrad 1 mit einem Losrad 2. Das Festrad 1 und das Losrad 2 besitzt im Flankenbereich mehrere Magnetstreifen 50, 51, 52 und 53. Die Magnetstreifen 50 bis 53 sind mit einer Stromquelle 10 verbunden. Die Magnetstreifen 50 und 51 sind gleich gepolt, so dass sich die zugehörigen Zahnflanken, wie durch den Doppelpfeil 54 angedeutet ist, abstoßen. Die Magnetstreifen 52 und 53 sind unterschiedlich gepolt, so dass sich die zugehörigen Zahnflanken, wie durch Pfeile 55 und 56 angedeutet ist, anziehen. Der angelegte Strom im Flankenbereich ist dabei proportional zur Magnetkraft. Durch eine gezielte Änderung der Magnetkraft und der Polung wird das Aneinanderschlagen der Zahnräder 1 und 2 je nach Betriebszustand verhindert.

Bei der in Figur 17 dargestellten Ausführungsform ist ein Losrad 2 auf einer Antriebswelle 5 gelagert. Das Losrad 2 besitzt am linken und am rechten Axialbund jeweils zwei gegenüberliegend angeordnete Magnete 58, 59 und 60, 61. Die Magnete 58 bis 61 sind über elektrische Schleifkontakte mit einer Stromquelle 10 gekoppelt. Durch den Strom im Axialbereich kann die Anziehung bzw. Abstoßung in diesem Bereich so variiert werden, dass die Axialstöße je nach Bedarf gedämpft werden. Der Strom ist dabei proportional zur Magnetkraft. Durch Doppelpfeile 62 ist angedeutet, dass sich die Magnete 58, 59 und 60, 61 abstoßen.

Die in den Figuren 18 bis 20 dargestellten Ausführungsformen entsprechen weitestgehend den in den Figur 5 bis 7 dargestellten Ausführungsformen. Im Unterschied zu den in den Figuren 5 bis 7 dargestellten Ausführungsformen wird in den Figuren 18 bis 20 jedoch statt eines Piezoelements ein Element aus einem magnetostriktiven Werkstoff verwendet. In Figur 18 ist ein Element 64 aus einem magnetostriktiven Werkstoff zwischen dem Zahn eines Festrades 1 und dem gegenüberliegenden Zahn eines Losrades 2 angeordnet. Durch Anlegen einer Spannung 10 erfährt das Element 64 eine Längenänderung senkrecht zur Zahnflanke. Die Spannung ist dabei proportional zu der Längenänderung des Elements 64. Durch die gezielte Spannungsregelung erfährt der magnetostriktive Werkstoff im Flankenbereich eine Volumenänderung. Diese Volumenänderung bewirkt eine Optimierung des Verdrehflankenspiels.

In Figur 19 ist dargestellt, dass ein Element 65 aus einem magnetostriktiven Werkstoff auch im Radiallagerbereich zwischen einem Losrad 2 und einer Welle 5 angeordnet sein kann. Somit kann das Losrad 2 aktiv je nach Betriebszustand beeinflusst werden.

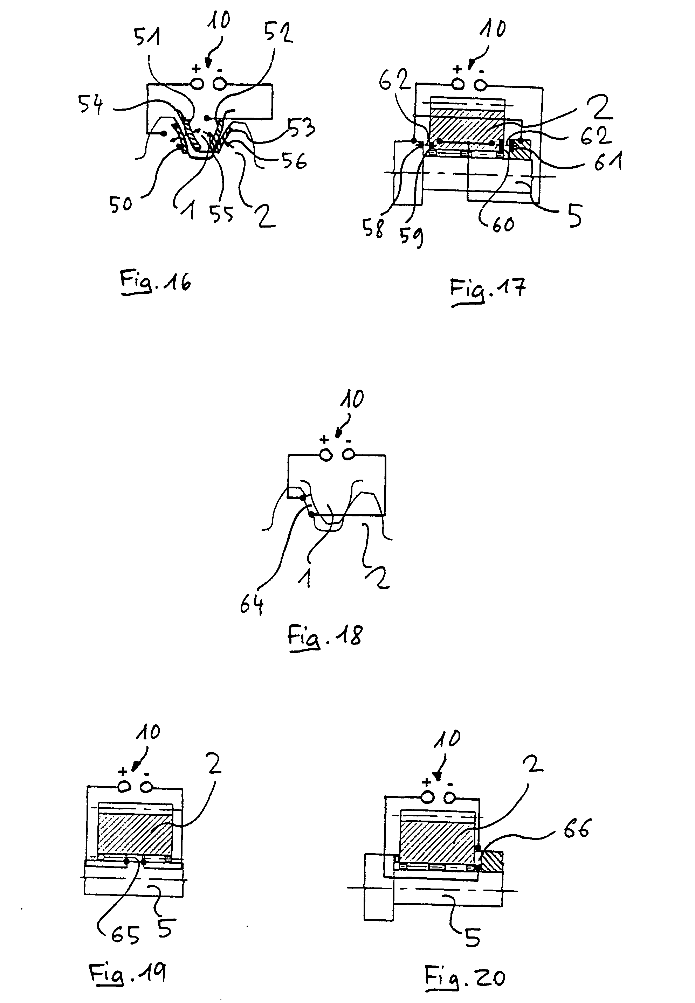

In Figur 20 ist zu sehen, dass ein Element 66 aus einem magnetostriktiven Werkstoff im Axiallagerbereich zwischen der Stirnfläche eines Losrades 2 und einem gegenüberliegenden Axialbund angeordnet ist. Durch Anlegen einer Spannung 10 kann eine Volumenänderung des Elements 66 in axialer Richtung hervorgerufen werden, um das Axialspiel auszugleichen.

## Patentansprüche

1. Getriebe, insbesondere Zahnradgetriebe, mit mehreren in Eingriff befindlichen Getriebeelementen (1, 2), insbesondere Zahnrädern, **gekennzeichnet durch** Sensoren (16, 19), welche Parameter erfassen, die für Geräusche relevant sind, die im Leerlauf und im Zug- bzw. Schubbetrieb des Getriebes von aneinanderschlagenden lastlosen Getriebeelementen verursacht werden, und welche entsprechende Signale an eine Informationsverarbeitungseinheit (20) liefern, die mit Hilfsmitteln (9, 25, 26, 28, 50 bis 52, 64) gekoppelt ist, welche ein zwischen den beiden Getriebeelementen (1,2) vorhandenes Spiel (3) abhängig von den Signalen aktiv so beeinflussen, dass verhindert wird, dass die lastlosen Getriebeelemente (1, 2) voneinander abheben und aneinander schlagen.

2. Getriebe nach Anspruch 1, **dadurch gekennzeichnet, dass** mindestens eines der Getriebeelemente (1, 2) einen Bereich mit einer Komponente aus einem Werkstoff mit einem Formänderungsvermögen aufweist.

3. Getriebe nach einem der Ansprüche 1 oder 2, **dadurch gekennzeichnet, dass** die Lagerung mindestens eines Getriebeelements (1, 2) einen Bereich mit einer Komponente aus einem Werkstoff mit einem Formänderungsvermögen aufweist.

4. Getriebe nach Anspruch 2 oder 3, **dadurch gekennzeichnet, dass** es sich bei dem Werkstoff mit dem Formänderungsvermögen um ein Bimetall, eine Gedächtnislegierung, ein Gedächtnispolymer, einen magnetostriktiven Werkstoff und/oder einen Piezowerkstoff handelt.

5. Getriebe nach Anspruch 1, **dadurch gekennzeichnet, dass** die Hilfsmittel mindestens eine aktive Feder (28) umfassen, die aufgrund des durchfließenden elektrischen Stroms ihre Federrate ändert.

6. Getriebe nach Anspruch 1, **dadurch gekennzeichnet, dass** die Hilfsmittel mindestens eine Bohrung (31, 34, 38), welche mindestens in einem der Getriebeelemente (1, 2) angebracht ist und die mit einer Fluidquelle in Verbindung steht, und ein Ventil (33, 35) umfassen, welches mit der Informationseinheit (20) gekoppelt ist, um einen aus der Bohrung austretenden Fluidstrahl in Abhängigkeit von geräuschrelevanten Parametern zu regeln.

7. Getriebe nach Anspruch 1, **dadurch gekennzeichnet, dass** die Hilfsmittel eine aktive Haftschicht (42) umfassen, mit der mindestens eines der Getriebeelemente (1, 2) versehen ist und die mit einer Spannungsquelle (10) gekoppelt ist, die mit der Informationsverarbeitungseinheit (20) verbunden ist.

8. Getriebe nach Anspruch 1, **dadurch gekennzeichnet, dass** die Hilfsmittel als Getriebeöl eine elektrorheologische oder magnetorheologische Flüssigkeit (44, 46, 48) und eine Einrichtung zum Erzeugen eines elektrischen oder magnetischen Feldes (45, 47, 49) umfassen, mit der die Getriebeelemente (1, 2) ausgestattet sind und welche mit der Informationsverarbeitungseinheit (20) gekoppelt ist, um die viskosität der Flüssigkeit zu beein flussen.

9. Getriebe nach einem der vorhergehenden Ansprüche, **dadurch gekennzeichnet, dass** die Sensoren mindestens einen der folgenden Parameter erfassen: Verdrehflankenspiel, Axialspiel, Radialspiel, Winkelbeschleunigung, Drehzahl, Getriebeöltemperatur, Betriebszustand des Getriebes.

10. Getriebe nach einem der vorhergehenden Ansprüche, **dadurch gekennzeichnet, dass** die Sensoren, die Informationsverarbeitungseinheit, und die Hilfsmittel Teil eines geschlossenen Regelkreises sind.

## Claims

1. Gearbox, in particular, a toothed gear gearbox having a plurality of gearing elements (1, 2) meshing with each other, in particular toothed gears, **characterised in that** it has sensors (16, 19) that detect parameters relevant to noise caused by load-free gearing elements colliding with each other during idling and during pulling or pushing operation of the gearbox, and which supply corresponding signals to an information processing unit (20), which is coupled to auxiliary means (9, 25, 26, 28, 50 to 52, 64) which actively influence backlash (3) present between the two gearing elements (1, 2), dependent upon the signals, such that it is prevented that the load-free gearing elements (1, 2) lift off each other and collide with each other.

2. Gearbox according to Claim 1, **characterised in that** at least, one of the gearing elements (1, 2) has a region with a component made of a material with a deformation capacity.

3. Gearbox according to one of the claims 1 or 2, **characterised in that** the bearing of at least one gearing element (1, 2) has a region with a component made of a material with a deformation capacity.

4. Gearbox according to Claim 2 or 3, **characterised in that** the material with the deformation capacity is a bimetal, a memory alloy, a memory polymer, a magnetostrictive material and/or a piezoelectric material.

5. Gearbox according to Claim 1, **characterised in that** the auxiliary means comprises at least one active spring (28), which changes its spring modulus due to the electric current flowing through it.

6. Gearbox according to Claim 1, **characterised in that** the auxiliary means comprise at least one bore (31, 34, 38) introduced into at least one of the gearing elements (1, 2) and connected to a fluid source, and a valve (33, 35), which is coupled to the information processing unit (20), in order to control a fluid jet emerging from the bore, dependent upon noise-related parameters.

7. Gearbox according to Claim 1, **characterised in that** the auxiliary means comprise an active adhesive layer (42) with which at least one of the gearing elements (1, 2) is provided and which is coupled to a voltage source (10) connected to the information processing unit (20).

8. Gearbox according to Claim 1, **characterised in that** the auxiliary means comprise as gear oil an electrorheological or magnetorheological fluid (44, 46, 48) and a device for generating an electrical or magnetic field (45, 47, 49), with which the gearing elements (1, 2) are equipped and which is coupled to the information processing unit (20), in order to influence the viscosity of the fluid.

9. Gearbox according to one of the previous claims, **characterised in that** the sensors detect at least one of the following parameters: circumferential backlash, axial backlash, radial backlash, angular acceleration, rotary speed, gear oil temperature, operating condition of the gearbox.

10. Gearbox according to one of the previous claims, **characterised in that** the sensors, the information processing unit and the auxiliary means are part of a closed-loop control system.

## Revendications

1. Train d'engrenages, en particulier train d'engrenages à roues dentées, comportant plusieurs éléments d'engrenage (1, 2) en engrènement, en particulier des roues dentées, **caractérisé par** des capteurs (16, 19) qui mesurent des paramètres relatifs aux bruits générés par des éléments d'engrenage sans charge, qui s'entrechoquent lorsque le train d'engrenages fonctionne à vide et est en traction ou en déplacement, et qui délivrent des signaux correspondants à une unité de traitement de l'information (20) qui est reliée à des moyens auxiliaires (9, 25, 26, 28, 50 à 52, 64) qui influent activement, en fonction des signaux, sur un jeu (3) existant entre les deux éléments d'engrenage (1, 2) de façon à empêcher que les éléments d'engrenage (1, 2) sans charge décollent les uns des autres et s'entrechoquent.

2. Train d'engrenages selon la revendication 1, **caractérisé en ce qu'**au moins l'un des éléments d'engrenage (1, 2) possède une zone comportant un composant en un matériau déformable.

3. Train d'engrenages selon l'une des revendications 1 ou 2, **caractérisé en ce que** le palier d'au moins un élément d'engrenage (1, 2) possède une zone comportant un composant en un matériau déformable.

4. Train d'engrenages selon la revendication 2 ou 3, **caractérisé en ce que** le matériau déformable est un bimétal, un alliage à mémoire, un polymère à mémoire, un matériau magnétostrictif et/ou un matériau piézoélectrique.

5. Train d'engrenages selon la revendication 1, **caractérisé en ce que** les moyens auxiliaires comportent au moins un ressort actif (28) dont la raideur varie en fonction du courant électrique qui le traverse.

6. Train d'engrenages selon la revendication 1, **caractérisé en ce que** les moyens auxiliaires comportent au moins un perçage (31, 34, 38), qui est ménagé dans l'un des éléments d'engrenage (1, 2) et qui est en liaison avec une source de fluide, et un clapet (33, 35), qui est couplé à l'unité de traitement de l'information (20) pour réguler un jet de fluide sortant du perçage en fonction de paramètres relatifs aux bruits.

7. Train d'engrenages selon la revendication 1, **caractérisé en ce que** les moyens auxiliaires comportent une couche adhésive active (42) dont est doté au moins l'un des éléments d'engrenage (1, 2), et qui est couplée à une source de tension (10) qui est reliée à l'unité de traitement de l'information (20).

8. Train d'engrenages selon la revendication 1, **caractérisé en ce que** les moyens auxiliaires comportent comme huile d'engrenage un fluide électro-rhéologique ou magnéto-rhéologique (44, 46, 48), ainsi qu'un dispositif destiné à générer un champ électrique ou magnétique (45, 47, 49) dont sont équipés les éléments d'engrenage (1, 2) et qui est couplé à l'unité de traitement de l'information (20) pour influer sur la viscosité du fluide.

9. Train d'engrenages selon l'une des revendications précédentes, **caractérisé en ce que** les capteurs mesurent l'un des paramètres suivants : le jeu primitif des roues dentées, le jeu axial, le jeu radial, l'accélération angulaire, le nombre de tours, la température de l'huile d'engrenage, et l'état de fonctionnement du train d'engrenage.

10. Train d'engrenages selon l'une des revendications précédentes, **caractérisé en ce que** les capteurs, l'unité de traitement de l'information et les moyens auxiliaires font partie d'une boucle d'asservissement fermée.
